# EUROPÄISCHE PATENTANMELDUNG

(11) **EP 1 092 926 A2**
(43) Veröffentlichungstag der Anmeldung: **18.04.2001**
(21) Anmeldenummer: 99203385.2
(22) Anmeldetag: 15.10.1999
(51) Int. Cl.: F24D 17/00

(54) **System zum Erwärmen von Zapfwasser mit Sonnenenergie, mit Anti-Legionella-Einrichtungen**

(30) Priorität: 11.10.1999 NL 1013261
(71) Anmelder: Heatex B.V., 9482 TW Tynaarlo (NL)
(72) Erfinder: Willemsen, Johannes Albertus Hendrikus, 9482 RZ Tynaarlo (NL)
(74) Vertreter: Ottevangers, Sietse Ulbe

(57) **Zusammenfassung**

System zum Erwärmen von Zapfwasser mit Sonnenenergie, mit einem Kollektorkreis, einem Sonnenkollektor (10) und einem mit dem Kollektorkreis (10) in Reihe geschalteten Speichergefäß (20; 120; 220; 320) mit einem Speicherraum zum Speichern von erwärmtem Fluidum, wobei das Speichergefäß (20; 120; 220; 320) eingerichtet ist, um vom Sonnenkollektor (10) erwärmtes Fluidum zu speichern, und wobei der Speicherraum des Speichergefäßes (20; 120; 220; 320) in Wärmetauschverbindung, jedoch nicht in Fluidumtauschverbindung, mit einem Zapfwasserkanal steht. Dadurch, daß Fluidum, das längere Zeit im Speicherraum verweilt, nicht als Zapfwasser abgezapft wird, ist Verseuchung des Zapfwassers mit etwaigen Bakterien, die im Speicherraum zum Wachstum gelangt sind, unmöglich und können auf Wunsch nicht für Zapfwasser bestimmte Zusatzstoffe im Fluidum im Speicherraum angewendet werden.

## Beschreibung

Die Erfindung bezieht sich auf ein System zum Erwärmen von Zapfwasser mit Sonnenenergie nach dem Oberbegriff des Anspruchs 1. Zapfwasser ist im allgemeinen bestimmt für, unter anderem, den persönlichen Gebrauch, zum Beispiel als Reinigungsmittel und zum Trinken. Zapfwasser wird manchmal auch als Sanitärwasser, Trinkwasser oder Leitungswasser bezeichnet.

Derartige Systeme werden in der Praxis oft als Sonnenboilersysteme bezeichnet. In derartigen Installationen wird von einem Sonnenkollektor erwärmtes Wasser durch eine im Speichergefäß (der Sonnenboiler im engeren Sinne) vorhandene Erwärmungsspirale geführt, um das im Speichergefäß enthaltene Zapfwasser zu erwärmen. Das auf diese Weise erwärmte Zapfwasser bleibt im Speichergefäß aufbewahrt, bis es für den Gebrauch abgezapft wird. Die Temperatur, auf welche das Wasser im Speichergefäß erwärmt wird, liegt in einer gemäßigten Klimazone unter 55°C und bleibt, auch in wärmeren Klimas, abhängig von, unter anderem, der Jahreszeit, den Witterungsverhältnissen und dem Warmwasserverbrauch oft längere Zeit unter dieser Temperatur.

Wenn Wasser während längerer Zeit auf eine Temperatur zwischen 25°C und 55°C bleibt, ist die Möglichkeit sehr groß, daß starkes Bakterienwachstum auftritt, insbesondere Wachstum der für den Menschen gefährlichen Legionella-Bakterien. Das Risiko ist daher erheblich, daß im Speichergefäß ein derartiges Legionella-Bakterienwachstum auftritt, daß warmes Wasser abgezapft wird, daß derart mit Bakterien verseucht ist, daß dadurch die Gesundheit des Benutzers gefährdet wird.

Es ist Aufgabe der Erfindung, mit dem Erwärmen von Zapfwasser mit Sonnenenergie verbundene zusätzliche Risiken eines die Gesundheit gefährdenden Wachstums von Legionella-Bakterien zu vermeiden. Zum Erfüllen dieser Aufgabe verschafft die Erfindung ein System nach Anspruch 1.

In Systemen nach der Erfindung bleibt Zapfwasser im Zapfwasserkanal in der Zapfwasserleitung getrennt vom Fluidum im Speicherraum des Speicherreservoirs. Fluidum, das längere Zeit im Speichergefäß enthalten ist, gelangt also nicht in die Zapfwasserleitung. Hierdurch wird vermieden, daß gegebenenfalls mit Legionella verseuchtes Fluidum aus dem Speichergefäß in von einem Benutzer abgezapftes warmes Wasser gelangen kann. Das Wärmeübertragungsfluidum wird also vom Zapfwasser getrennt gehalten. Dadurch, daß das Wärmeübertragungsfluidum vom Zapfwasser getrennt gehalten wird und also nicht in das Zapfwasser gelangt, wird es jedoch auch ermöglicht, daß ein Legionella-unfreundliches Wärmeübertragungsfluidum angewendet wird.

Das Speichergefäß, das in den Kollektorkreis aufgenommen ist, um vom Sonnenkollektor erwärmtes Fluidum im Speicherraum zu empfangen, bildet trotzdem eine wirksame Vorratseinrichtung zum Speichern von akkumulierter thermischer Energie. Dadurch, daß weiter eine Wärmetauschverbindung zwischen dem Zapfwasserkanal und dem Speicherraum zum Übertragen von Wärme aus im Speicherraum gespeichertem Fluidum auf Wasser in dem Zapfwasserkanal vorgesehen ist, wird eine wirksame Übertragung gespeicherter Wärme auf das Zapfwasser ermöglicht.

Im folgenden werden diese und andere Aufgaben, Aspekte und Einzelheiten der Erfindung weiter beschrieben anhand einer ausführlichen Beschreibung einer Anzahl Ausführungsbeispiele, anhand der Zeichnung, in der:
Fig. 1 ein erstes Ausführungsbeispiel nach der Erfindung zeigt,
Fig. 2 ein zweites Ausführungsbeispiel nach der Erfindung zeigt,
Fig. 3 ein drittes Ausführungsbeispiel nach der Erfindung zeigt, und
Fig. 4 ein alternatives Ausführungsbeispiel eines Speichergefäßes für ein System nach Fig. 3 zeigt.

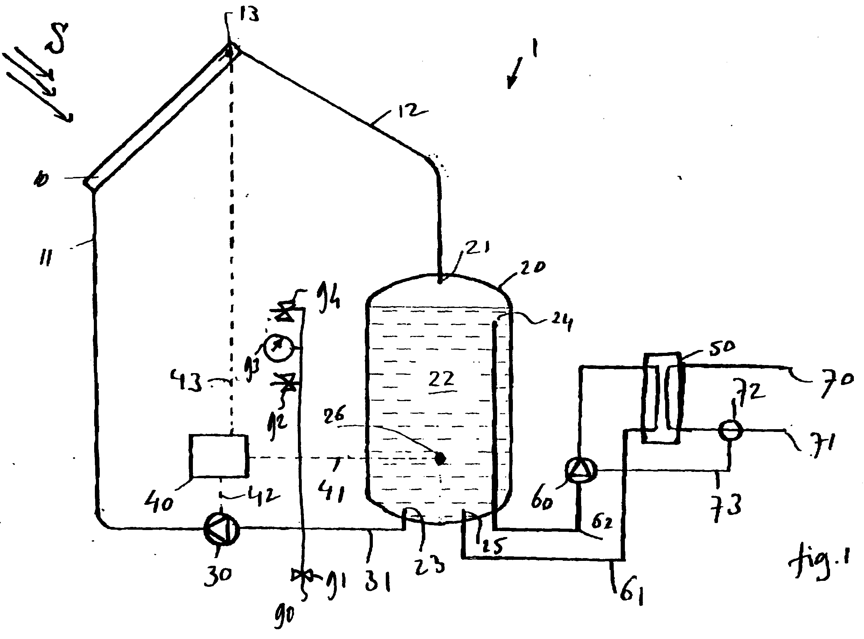

In Fig. 1 ist ein Ausführungsbeispiel der Erfindung gezeigt, das im Moment am meisten bevorzugt ist. Das Sonnenboilersystem 1 weist einen Sonnenkollektor 10 auf, der eingerichtet ist, um mittels Sonnenstrahlung ein Fluidum zu erwärmen. Der Sonnenkollektor 10 ist zwischen eine stromaufwärts liegende Zuführleitung 11 und eine stromabwärts liegende Abführleitung 12 angeschlossen. Fluidum strömt im Betrieb über die Zuführleitung 11, durch den Sonnenkollektor 10 und dann über die Abführleitung 12. Während das Fluidum durch den Sonnenkollektor 10 strömt, wird das Fluidum von der Sonnenstrahlung (Pfeile S) erwärmt. Im Betrieb ist der Sonnenkollektor 10 im wesentlichen auf die Sonne gerichtet. Der dabei am höchsten liegende Teil des Sonnenkollektors 10, und damit der im Betrieb wärmste Teil, ist mit einem Temperatursensor 13 versehen, der die Temperatur des Sonnenkollektors 10 an einer Stelle mißt, wo diese bei einem Wärmestrom zum Wasser im Kollektor 10 höher ist als die Temperatur des Wassers, das den Kollektor 10 verläßt.

Die Abführleitung 12 verläuft weiter zu einem Speicherreservoir, im folgenden Sonnenboiler 20 genannt, in den die Abführleitung 12 über einen Durchlaß 21 im oberen Bereich des Sonnenboilers 20 ausmündet. Der Sonnenboiler 20 ist eingerichtet, um eine Menge Fluidum zu speichern, in diesem Beispiel bestehend aus Wasser, gegebenenfalls mit Zusatzstoffen, für zum Beispiel Gefrierpunkterniedrigung, Siedepunkterhöhung, Korrosionsschutz und Verhinderung des Wachstums von Organismen im Wasser. Statt Wasser als Fluidum können übrigens auch andere Wärmetransportmedien wie andere Flüssigkeiten angewendet werden.

Der Sonnenboiler 20 ist an einer Unterseite mit einem Abgabedurchlaß 23 versehen, an den eine Leitung 31 anschließt. Diese Leitung 31 führt zu einer Pumpe 30, an die ein Stromaufwärtsende der Leitung 11 zum Sonnenkollektor 10 anschließt.

Der Sonnenboiler 20 ist mit einem Temperatursensor 26 versehen, der die Temperatur des im Sonnenboiler 20 enthaltenen Wassers mißt. Der Sensor 26 ist über eine Verbindung 41 mit einer Steuereinheit 40 verbunden. Die Steuereinheit 40 ist weiter über eine Verbindung 43 mit dem Temperatursensor 13 des Sonnenkollektors 10 und über eine Verbindung 42 mit der Pumpe 30 verbunden. Die Steuereinheit 40 ist eingerichtet, um auf Basis der von den Sensoren 13 und 26 gemessenen Temperaturen die Pumpe 30 zu bedienen. Übrigens kann die Steuereinheit 40 auch für andere Steueraufgaben des Sonnenboilersystems eingerichtet und angeschlossen sein.

Das beispielsweise vorgeschlagene System ist weiter versehen mit einem Füll/Abzapfanschluß 90 mit einem Absperrventil 91, einem Überlaufventil 92 zum Abführen von Wasser, wenn der Druck im System zu hoch wird, einem Manometer 93, um den Druck im System zu kontrollieren, und einem Überlaufventil 94 zum Begrenzen des Wasserspiegels im Speicherraum 22.

Im Betrieb wird die Strahlung der Sonne S auf den Sonnenkollektor 10 fallen. Hierdurch wird die Temperatur des Sonnenkollektors 10 steigen; diese Temperatur wird vom Temperatursensor 13 gemessen, der die gemessene Temperatur über die Verbindung 43 an die Steuereinheit 40 weiterleitet. Die Steuereinheit 43 empfängt weiter über die Verbindung 41 vom Sensor 26 ein Signal, das die Temperatur des in einem Speicherraum 22 im Sonnenboiler 20 enthaltenen Wassers angibt. Wenn die Temperatur des Sonnenkollektors 10 höher ist als die Temperatur des Wassers im Sonnenboiler 20, schaltet die Steuereinheit 40 die Pumpe 30 ein. Hierdurch wird über den Abgabedurchlaß 23 Wasser unten aus dem Sonnenboiler 20 gepumpt und über die Leitungen 31 und 11 zum Sonnenkollektor 10 gepumpt. Das Wasser wird von der Sonnenstrahlung S erwärmt, während es dort hindurchläuft, und wird, nachdem es also erwärmt worden ist, über die Leitung 12 zum Auslaß 21 in den oberen Teil des Sonnenboilers 20 geführt. Hierdurch steigt die Temperatur des Wassers im Sonnenboiler. Der Prozeß des Umpumpens und Erwärmens von Wasser durch den Kollektorkreis, gebildet durch, in Strömungsrichtung betrachtet, den Sonnenboiler 20, die Leitungen 31, 11, den Sonnenkollektor 10 und die Leitung 21, kann weitergehen, wenn die Temperatur des Wassers, wie vom Sensor 26 gemessen, niedriger ist als die Temperatur des Sonnenkollektors 10, wie vom Sensor 13 gemessen. Wenn die Wassertemperatur, wie vom Sensor 26 gemessen, höher ist als die Temperatur des Sonnenkollektors 10, wie vom Sensor 13 gemessen, schaltet die Steuereinheit 40 die Pumpe 30 aus.

Die Pumpe 30 wird auch ausgeschaltet als Reaktion auf das Erreichen durch den Sensor 13 im Sonnenkollektor 10 einer Temperatur, die so hoch ist, daß ein Sieden des Wassers im Kollektor 10 droht. Weiter wird die Pumpe 30 auch ausgeschaltet als Reaktion auf das Erreichen durch den Sensor 26 im Sonnenboiler 20 einer Temperatur nahe der maximalen Sonnenboilertemperatur.

Das Stromabwärtsende 21 des Kollektorkreises mündet in einen oberen Bereich des Speicherraumes 22 im Speichergefäß 20 aus, welcher obere Bereich im Gebrauch über dem Fluidumspiegel im Speichergefäß 20 liegt. Ein Abgabedurchlaß 24, über den der Speicherraum 22 im Speichergefäß 20 mit einem außerhalb des Speichergefäßes 20 liegenden Wärmetauscher 50 kommuniziert, liegt im Abstand unter diesem oberen Bereich, um zu gewährleisten, daß immer Wasser zum Austauschen von Wärme mit dem Zapfwasser zur Verfügung steht. Das Stromaufwärtsende 23 des Kollektorkreises schließt in einem größeren Abstand unter dem oberen Bereich des Speicherraumes 22 an das Speichergefäß 20 an und liegt im Gebrauch ebenfalls immer unter dem Fluidumspiegel im Speichergefäß 20. Ein Teil des Kollektorkreises liegt auf einem Niveau, das gleich dem oder höher als das Niveau des vorgenannten oberen Bereiches ist. Unter normalen Betriebsbedingungen pumpt die Pumpe 30 Wasser in einem normalen Umlaufsinn vom Stromaufwärtsende 23 zum Stromabwärtsende 21 des Kollektorkreises. Der Kollektorkreis ist außerdem eingerichtet, um als Reaktion auf Abwesenheit eines Antriebes des Wasserumlaufes im normalen Umlaufsinn eine Wasserströmung entgegen dem normalen Umlaufsinn zuzulassen. Hierzu kann das Wasser in diesem Beispiel frei. durch die Pumpe 30 passieren, wenn die Pumpe 30 ausgeschaltet ist.

Wenn die Pumpe 30 ausgeschaltet ist, strömt das Wasser im Kollektorkreis durch den Höhenunterschied zwischen dem Stromabwärtsende 21 und dem Wasserspiegel im Speicherraum 22 auf das Stromaufwärtsende zu und wird die Stelle des Wassers in über dem Wasserspiegel im Speicherraum 22 liegenden Teilen des Kollektorkreises, einschließlich des Sonnenkollektors 10, durch Luft aus dem oberen Bereich des Sonnenboilers 20 eingenommen. Der Kollektorkreis läuft also leer, bis das Niveau des Wassers darin gleich dem Niveau des Wassers im Sonnenboiler 20 ist. Letzteres steigt übrigens beim Leerlaufen des Kollektorkreises. Alles in allem wird der Kollektor 10 - und vorzugsweise auch der Teil des Kollektorkreises, der sich in der Außenluft befindet oder durch eine andere Ursache der Einfriergefahr ausgesetzt ist - entleert, sobald der Kollektor 10 kälter als das Wasser im Sonnenboiler 20 wird oder so warm wird, daß Wasser im Kollektor 10 den Siedepunkt zu erreichen droht. Damit wird Gefrieren oder Sieden von Wasser im Sonnenkollektor 10 vermieden. Der Kollektorkreis wird auch entleert, wenn die Temperatur des Wassers im Sonnenboiler 20 die Maximumtemperatur erreicht hat, wobei die Pumpe 30 als Reaktion auf ein Signal vom Sensor 26 ausgeschaltet wird.

Das Reservoir 20 ist auch mit einem Abgabedurchlaß 24 versehen, dessen Zugang im oberen Bereich des Sonnenboilers 20 liegt. An den Abgabedurchlaß 24 schließt eine Leitung 62 an, in die eine Pumpe 60 aufgenommen ist und die zu einer ersten Seite des Wärmetauschers 50 führt. Der Wärmetauscher 50 ist vom sogenannten Gegenstromtyp. Durch den einen Kanal des Wärmetauschers 50 kann warmes Wasser und durch den anderen Kanal des Wärmetauschers kann kaltes, zu erwärmendes Zapfwasser geführt werden, wobei die Wärme des warmen Wassers auf das kalte, zu erwärmende Zapfwasser übertragen wird.

Eine Rückleitung 61 führt von der ersten Seite des Wärmetauschers 50 zum Sonnenboiler 20 zurück und mündet darin über eine Mündung 25 in einen unteren Teil des Sonnenboilers 20 aus. Auf der anderen Seite des Wärmetauschers 50 schließt auf einer Seite eine Kalt(zapf)wasserzuführleitung 71 und auf der anderen Seite eine Warm(zapf)wasserabführleitung 70 an den Wärmetauscher 50 an.

Ein Zapfwasserkanal erstreckt sich durch die Kaltwasserzuführleitung 71, den Wärmetauscher 50 und dann durch den Warmwasserabführleitung 70. In den Zapfwasserkanal - in diesem Beispiel in einen Teil davon in der Kaltwasserzuführleitung 71 - ist ein Strömungsechalter 72 aufgenommen. Wenn der Schalter einen Wasserstrom im Zapfwasserkanal 71 ermittelt, schaltet der Strömungsschalter 72 über die Verbindung 73 die Pumpe 60 ein. Beim Stoppen der Strömung durch die Kaltwasserzuführleitung 71 schaltet der Strömungsschalter 72 die Pumpe 60 wieder aus.

Wenn im Gebrauch ein Benutzer einen Warmwasserhahn öffnet, wird dem Wärmetauscher 50 über die Kaltwasserzuführleitung 71 kaltes Zapfwasser zugeführt. Als Reaktion auf die Strömung von Wasser durch den Zapfwasserkanal wird vom Strömungsschalter 72 die Pumpe 60 eingeschaltet. Die Pumpe 60 pumpt warmes Wasser aus dem Sonnenboiler 20, das danach über die Leitung 62 zum Wärmetauscher 50 strömt. Warme des Wassers aus dem Sonnenboiler 20 wird im Wärmetauscher 50 auf das kalte Zapfwasser übertragen, das über die Kaltwasserzuführleitung 71 zugeführt wird. Nachdem es erwärmt worden ist, wird dieses Wasser über die Warmwasserabführleitung 70 abgeführt. Dieses warme Zapfwasser kann dann, im allgemeinen nachdem es nachgewärmt worden ist, verwendet werden. Das Nachwärmen kann zum Beispiel erfolgen durch eine an sich bekannte Zapfwassererwärmungseinheit eines Zentralheizungakessels, durch einen elektrischen oder mit Brennstoff geheizten Boiler oder durch eine Wärmepumpe.

Das im Speicherraum 22 des Sonnenboilers 20 enthaltene Wasser wird, wenigstens im stationären Zustand, im allgemeinen eine nach oben hin ansteigende Temperatur aufweisen, wobei die oberen Schichten im Sonnenboiler 20 wärmer sind als die unteren Schichten. Der Abgabedurchlaß 24 liegt im oberen Teil des Sonnenboilers 20, wodurch, wenigstens wenn von der nach oben hin ansteigenden Temperatur die Rede ist, das wärmere Wasser aus dem Sonnenboiler 20 dem Wärmetauscher 50 zugeführt wird. Der Rückstrom des kalten Wassers wird dabei über die Mündung 25 in den unteren Teil des Sonnenboilers 20 abgegeben.

Die Mündung 21 der Leitung 12, über die im Sonnenboiler erwärmtes Wasser zugeführt wird, liegt im oberen Teil des Sonnenboilers 20. Dies ist an erster Stelle wichtig, um zu gewährleisten, daß beim Ausschalten der Pumpe 30 im Kollektorkreis das Wasser aus dem oberen Bereich des Kollektorkreises und insbesondere aus dem Kollektor 10 läuft und Luft aus dem Speicherraum 22 die Stelle des aus dem oberen Bereich des Kollektorkreises gelaufenen Wassers einnimmt. Dadurch, daß Luft aus dem Sonnenboiler verwendet werden kann, um das Abführen von Wasser aus dem oberen Bereich des Kollektorkreises zu unterstützen und um die Stelle des aus dem oberen Bereich des Kollektorkreises abgeführten Wassers einzunehmen, ist kein gesonderter Tank zum alternierenden Aufnehmen von Luft und des abgeführten Wassers notwendig, um den oberen Bereich des Kollektorkreises leerlaufen lassen zu können.

Weiter wird durch die hohe Lage der Mündung 21 der Leitung 12 zwischen dem Ausgang des Kollektors und dem Sonnenboiler 20 das im Sonnenboiler 10 erwärmte Wasser in einen oberen Bereich des Sonnenboilers 20 abgegeben. Der beschriebene Temperaturaufbau wird hierdurch möglichst wenig gestört.

Für den Nutzeffekt des Erwärmens des Wassers im Kollektorkreis ist es weiter vorteilhaft, daß der Abgabedurchlaß 23 der Leitung 31 zum Abnehmen des zu erwärmenden Wassers an den unteren Teil des Sonnenboilers 20 anschließt. Soweit der beschriebene Temperaturaufbau auftritt, wird dadurch vor allem das kältere Wasser aus dem Sonnenboiler 20 dem Sonnenkollektor 10 zugeführt. Also werden Wärmeverluste aus erwärmtem Wasser vermieden und wird der Wärmestrom zum Kollektor 10 unterstützt.

Beim Sonnenboilersystem 1 ist es kein Nachteil, daß das Wasser im Sonnenboiler 20 während längerer Zeit bei einer Temperatur zwischen 25°C und 55°C gespeichert wird, trotz der Tatsache, daß das Risiko eines Bakterienwachstums im Prinzip groß ist. Dadurch, daß der Kollektorkreis und der Zapfwasserkreis nur in wärmetauschender Beziehung zueinander stehen, kann das möglicherweise durch Bakterienwachstum verseuchte Wasser des Kollektorkreises nicht mit dem Zapfwasser im Zapfwasserkreis in Berührung kommen. Hierdurch wird vermieden, daß Zapfwasser verseucht wird.

Dadurch, daß Wasser aus dem Sonnenboiler 20 nicht als zapfwasser abgezapft wird, ist es außerdem nicht von Nachteil, Zusatzstoffe hinzuzufügen, die Bakterienwachstum, Korrosion, Kalkablagerung und dergleichen entgegenwirken, deren Anwesenheit im Zapfwasser jedoch unerwünscht ist.

Im Ruhezustand befindet sich Wasser im Wärmetauscher 50, in dem im Prinzip auf die Dauer auch Gesundheitsrisiken mit sich bringendes Bakterienwachstum auftreten könnte. Die Temperatur im nicht-isolierten Wärmetauscher 50 sinkt jedoch nach dem Gebrauch derart schnell auf die Umgebungstemperatur, daß im stationären Zustand die Temperatur des Wassers nie länger als einige Minuten in der Gefahrenzone ist. Eine Ausnahme gilt, wenn die Umgebungstemperatur höher als 25°C ist, aber auch dann ist die Gefahr des Legionella-Wachstums im Wärmetauscher nicht wesentlich größer als in einer beliebigen Warm- oder Kaltwasserleitung, in der das Wasser längere Zeit stillsteht.

Außerdem ist der Zapfwasserinhalt des Wärmetauschers sehr klein, vorzugsweise kleiner als 1 bis 3 Liter, wodurch die Verweilzeit von Wasser im Wärmetauscher bei regelmäßiger Abnahme von warmem Zapfwasser kurz ist. Auch wenn der Wärmetauscher durch regelmäßige Abnahme von warmem Zapfwasser keine Gelegenheit bekommt, abzukühlen, ist die Möglichkeit, daß die Gesundheit gefährdendes Bakterienwachstum im Zapfwasserkanalteil des Wärmetauschers auftritt, dadurch gleich Null.

Die Erfindung ist nicht auf den in diesem Beispiel genannten Gegenstromwärmetauscher beschränkt. Nach der Erfindung können auch andere Wärmetauscher angewendet werden, wobei zwischen dem Kollektorkreis und dem Zapfwasserkanal keine Übertragung von Wasser stattfinden kann.

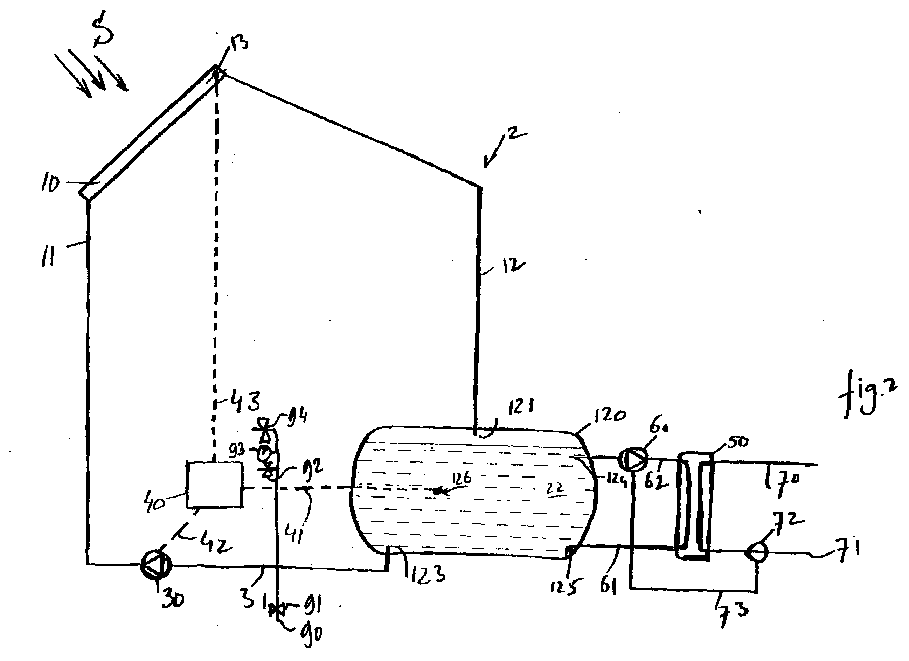

In Fig. 2 ist ein zweites Ausführungsbeispiel eines Sonnenboilersystems nach der Erfindung gezeigt. Das Sonnenboilersystem 2 weicht vom Sonnenboiler 1 nach Fig. 1 ab, was die Ausfübrungsform des Sonnenboilers 120 betrifft.

Der Sonnenboiler 10 weist eine langgestreckte Form auf und ist horizontal angeordnet, das heißt derart, daß im Betriebszustand die Höhe des Sonnenboilers 120 kleiner als die Länge und gegebenenfalls auch die Breite des Sonnenboilers ist.

Ebenso wie im vorigen Ausführungsbeispiel liegt die Mündung 121, die mit der vom Kollektor 10 kommenden Leitung 12 verbunden ist, in einem oberen Teil des Sonnenboilers 120, so daß auch in diesem Beispiel der obere Bereich des Kollektorkreises leerlaufen kann, wobei Luft aus dem Sonnenboiler, die über die Mündung 121 und die vom Kollektor 10 kommende Leitung 12 zum Kollektor strömt, die Stelle des weggelaufenen Wassers einnimmt.

Im Betrieb weist das wärmste Wasser die Neigung auf, sich im oberen Teil des Sonnenboilers 120 zu sammeln, während das kältere Wasser sich tendenziell vor allem im unteren Teil des Sonnenboilers 120 aufhält. Hierdurch entsteht eine Temperaturverteilung, wobei die Temperatur im Sonnenboiler 120 von unten nach oben zunimmt. Durch die hohe Anordnung der Mündung 121 und die Anordnung des Abgabedurchlasses 123 in Richtung auf den Sonnenkollektor 10 in einem unteren Teil des Sonnenboilers 120 wird diese Verteilung beim Wasserumlauf durch den Kollektorkreis möglichst wenig gestört. Weiter ist diese Anordnung der Mündung 121 und des Abgabedurchlasses 123 auch in diesem Beispiel dadurch vorteilhaft für die Leistung des Systems, daß das kälteste Wasser zum Sonnenkollektor transportiert wird.

Die langgestreckte Form des Sonnenboilers 120, der im Betrieb flach angeordnet ist, hat den Vorteil, daß der Sonnenboiler 120 stabiler liegt und in vielen Fällen eingebaut weniger Nutzraum in einem Gebäude beansprucht als ein aufrecht stehendes Reservoir wie gezeigt in Fig. 1, beispielsweise dadurch, daß Anordnung in einem Eckbereich eines Dachbodenraumes unter einem schrägen Dach oder unter dem First eines schrägen Daches möglich ist. Anders als bei einem herkömmlichen Sonnenboiler mit einer im wesentlichen zum Behälter koaxial angeordneten Spirale, wodurch im Betrieb das Wärmeübertragungsfluidum umläuft, wird beim vorgeschlagenen Sonnenboiler 120 in der horizontalen Lage das Leerlaufen des oberen Bereiches des Kollektorkreises nicht dadurch gestört, daß Lufteinschlüsse in der Spirale entstehen können. Weiter tritt dadurch, daß die vom Sonnenkollektor 10 kommende Leitung 12 direkt in den Speicherraum 22 ausmündet, nicht der Effekt auf, daß bei horizontaler Montage, im Gebrauch, unter der Erwärmungsspirale eine umfangreiche kalte Zone entsteht, die einen unwirksamen Teil des Boilerinhalts bildet.

In einem horizontal angeordneten Speichertank allmählich von oben nach unten führende Wasserleitungen sind an sich zwar bekannt, aber in der Praxis kaum zu realisieren und einzubauen, und deswegen teuer, und verursachen einen größeren Strömungswiderstand als eine schraubenförmig verlaufende Leitung.

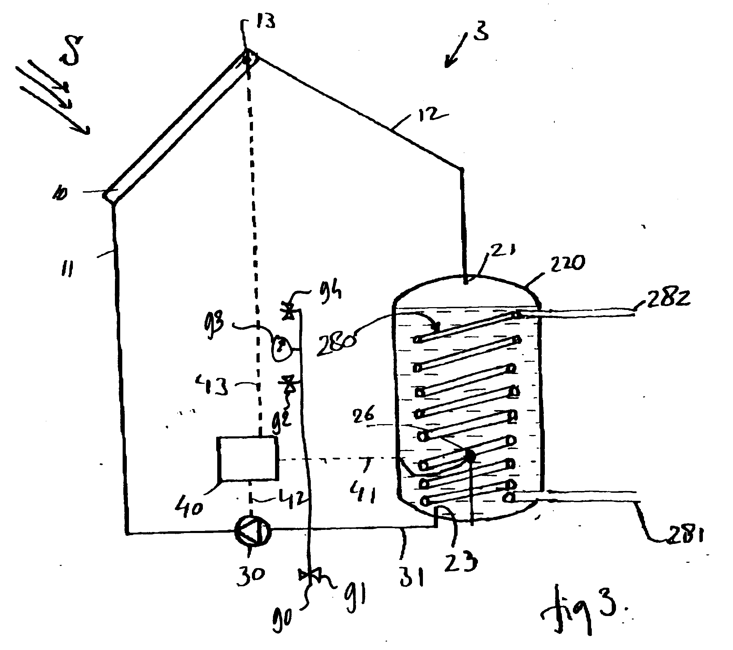

In Fig. 3 ist ein drittes Ausführungebeispiel nach der Erfindung gezeigt, dessen Aufbau kompakter und einfacher ist. Ebenso wie das Sonnenboilersystem 1 ist das Sonnenboilersystem 3 mit einem Kollektorkreis mit einem Sonnenkollektor 10 versehen, der mittels Leitungen 31, 11 und 12 mit einem Speicherreservoir 220 verbunden ist. Der Sonnenboiler 220 ist mit einem Temperatursensor 26 versehen, und der Sonnenkollektor 10 ist mit einem Temperatursensor 13 versehen. Beide Sensoren 13, 26 sind über jeweilige Verbindungen 41 und 43 mit einer Steuereinheit 40 verbunden. Die Steuereinheit 40 ist, wie auch im ersten Beispiel beschrieben, ausgebildet, um auf Basis von Meßangaben, die von den Sensoren 126 und 13 erhalten worden sind, über eine Verbindung 42 die in den Kollektorkreis aufgenommene Pumpe 30 anzusteuern.

Der Sonnenboiler 220 ist als ein im wesentlichen aufrecht stehender Zylinder ausgebildet. In einen oberen Teil des Sonnenboilers 220 mündet die Mündung 21 der vom Sonnenkollektor 10 kommenden Leitung 12 aus. In einem unteren Teil des Sonnenboilers 220 ist der Abgabedurchlaß 23 angeordnet, der mit der Leitung 31 zur Pumpe 30 in Verbindung steht.

Im Betrieb wird in entsprechender Weise wie im Sonnenboilersystem 1 nach Fig. 1 das Wasser im Speicherraum des Sonnenboilers 220 mittels der Sonnenstrahlung S aufgewärmt, die auf durch den Sonnenkollektor 10 passierendes Wasser einwirkt.

Eine durch eine Hohlleitung gebildete Spirale 280 liegt innerhalb des Sonnenboilers, wobei die axiale Achse der Spirale 280 im wesentlichen der axialen Achse des Sonnenboilers 220 entspricht. Das untere Ende der Spirale 280 ist mit einer Zapfwasserzuführleitung 281 verbunden, die sich durch die Wand des Sonnenboilers 220 erstreckt. Über diese Zuführleitung 281 kann kaltes Zapfwasser in die Spirale 280 geführt werden. Das obere Ende der Spirale 280 ist mit einer Warm(zapf)wasserabführleitung 282 verbunden, die sich durch die Wand des Sonnenboilers 220 erstreckt.

Im Betrieb ist der Speicherraum des Sonnenboilers 220 mit in oben beschriebener Weise aufgewärmtem Wasser gefüllt. Dadurch, daß kaltes Zapfwasser über die Zapfwasserzuführleitung 281 durch die Spirale 280 geführt wird, wird beim Zurücklegen der Strecke in der Spirale 280 Wärme des Wassers im Sonnenboiler 220 auf das Zapfwasser in der Spirale 280 übertragen. Wenn das Zapfwasser nach dem Zurücklegen der Strecke durch die Spirale 280 über die Zapfwasserabführleitung 282 hinaustritt, ist es aufgewärmt und kann es danach abgenommen oder nachgewärmt werden, wie vorbeschrieben. Die Spirale 280 ist also in wärmetauschender Beziehung zum Speicherraum des Sonnenboilers 220.

Wenn Wasser im Sonnenboiler 220 während längerer Zeit bei einer Temperatur zwischen 25°C und 55°C gespeichert wird, könnte eine beträchtliche Gefahr eines Bakterienwachstums im Wasser im Speicherraum des Sonnenboilers 220 entstehen. Dadurch, daß der Kollektorkreis und das Zapfwasser in der Zapfwasserleitung voneinander getrennt sind, kommt das Wasser des Kollektorkreises nicht mit dem Zapfwasser in der Zapfwasserleitung in Berührung. Hierdurch kann Zapfwasser nicht durch Wasser im Hauptraum des Speichertanks verseucht werden.

Bei Verwendung des Sonnenboilersystems 3 wie oben beschrieben kann es vorkommen, daß während langer Zeit keine Durchströmung in der Spirale 280 stattfindet. Die geringe Menge des in der Spirale 280 enthaltenen Wassers (vorzugsweise weniger als 1 Liter) kann dann während langer Zeit auf einer Temperatur zwischen 25 und 55°C bleiben. Es steht noch nicht fest, ob Legionella-Wachstum in einer derartigen kleinen Menge Wasser wesentliche Gesundheitsrisiken mit sich bringt.

Zur weiteren Vermeidung von Risiken eines die Gesundheit gefährdenden Bakterienwachstums in Zapfwasser in der Spirale 280 kann diese jedoch derart ausgebildet sein, daß sie entleert werden kann.

Mit dem Entleeren wird vorzugsweise immer gewartet, bis nach dem Abnehmen von warmem Zapfwasser eine minimale Zeitdauer verstrichen ist, innerhalb deren sich auf jeden Fall keine die Gesundheit gefährdende Legionella-Entwicklung ergeben kann. Ein sinnloses Entleeren der Spirale wird so vermieden.

Das Entleeren der Spirale 280 kann zum Beispiel durch Abzapfventile erreicht werden, die als Reaktion auf von einem Strömungsschalter kommende Signale gesteuert werden.

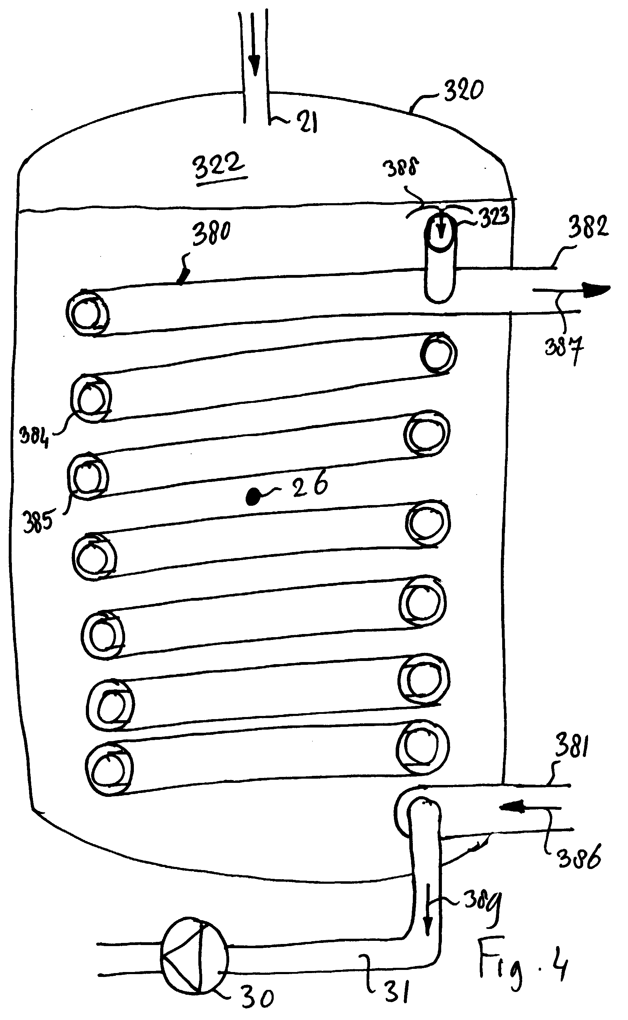

In Fig. 4 ist eine alternative Ausführungsform eines Sonnenboilers für das System nach Fig. 3 gezeigt. Der Sonnenboiler 320 ist ebenfalls mit einem Temperatursensor 26 versehen. In einem oberen Bereich des Sonnenboilers 320 befindet sich die Mündung 21 der vom Sonnenkollektor 10 kommenden Leitung 12, so daß diese mit Luft (oder einem flüchtigen Fluidum) über dem Wasser im Sonnenboiler 320 kommuniziert. Gerade unter dem oberen Bereich des Sonnenboilers 320 liegt der Abgabedurchlaß 323, der mit der Leitung 31 zur Pumpe 30 in Verbindung steht, so daß dieser immer unter Wasser liegt. Ein Teil 384 des Kollektorkreises direkt stromabwärts des Abgabedurchlasses 323 verläuft schraubenförmig durch den Innenraum 322 des Sonnenboilers 320 und ist mit einer im wesentlichen koaxial dazu verlaufenden Zapfwasserleitung 380 umhüllt, die ebenfalls schraubenförmig durch den Innenraum 322 des Sonnenboilers 320 verläuft. Der Innendurchlaß der Zapfwasserleitung 380 ist derart größer als der gesamte Querschnitt des Teiles 384 des Kollektorkreises, daß zwischen dem Teil 384 des Kollektorkreises und der Zapfwasserleitung 380 eine Durchlaßzone 385 zum Durchlassen von Zapfwasser verbleibt.

Diese Durchlaßzone 385 schließt an eine Zapfwasserzuführleitung 381 an und an die Durchlaßzone 385 schließt an eine Zapfwasserabführleitung 382 an. Zapfwasser wird als kaltes Wasser in der mit einem Pfeil 386 angegebenen Richtung zugeführt und als erwärmtes Wasser in der mit einem Pfeil 387 angegebenen Richtung abgeführt. In der Durchlaßzone 385 ist der Zapfwasserkanal an der Außenseite durch Wasser im Speicherraum 322 umringt, der, wenn von einem Temperaturgradienten die Rede ist, nach oben hin wärmer wird, so daß das Wasser in der Durchlaßzone, je nachdem es weiter aufgewärmt worden ist, tendenziell in wärmetauschende Beziehung zu wärmerem Wasser im Speicherraum 322 kommt.

Innerhalb der Durchlaßzone 385 verläuft der Stromaufwärtsteil des Kollektorkreises 384. Hierdurch strömt das oberste, tendenziell wärmste Wasser aus dem Speicherraum 322 in der mit Pfeilen 388, 389 angegebenen Richtung zur Pumpe 30. Dieses Wasser, das innerhalb der Durchlaßzone 385 hindurchströmt, ist ebenfalls in wärmetauschender Beziehung zum Zapfwasser in der Durchlaßzone 385. Das Zapfwasser in der Durchlaßzone 385 wird also von außen her und von innen her aufgewärmt, wobei sowohl an der Innenseite als auch an der Außenseite tendenziell das Wärmeübertragungswasser, je nachdem es wärmer ist, in wärmetauschender Beziehung zu weiter aufgewärmtem Zapfwasser ist.

Bei dieser Ausführungsform der Struktur zum Übertragen von Wärme von dem vom Kollektor erwärmten Wasser auf das Zapfwasser wird das vom Kollektor erwärmte Wasser, bevor es zum Kollektor 10 strömt, stark abgekühlt, wenigstens wenn erwärmtes Zapfwasser abgenommen wird, was für die Leistung des Sonnenboilersystems günstig ist. Weiter ist der Temperaturunterschied zwischen dem erwärmten Wasser und dem als Wärmeübertragungsmedium dienenden Wasser durch den intensiven Wärmetausch gering, wodurch bei gegebenen Wassertemperaturen im Speicherraum 322 wärmeres Zapfwasser erhalten wird als bei der Ausführungsform nach Fig. 3 der Fall ist. Auch dies ist günstig für die Leistung des Sonnenboilersystems und besonders wichtig für Sonnenboilersysteme, weil dabei die Temperatur des vom Kollektor 10 kommenden Wassers meistens nicht deutlich höher ist als die gewünschte Endtemperatur des erwärmten Zapfwassers. Es ist ein weiterer Vorteil des Sonnenboilers 320 nach Fig. 4, daß bei Anordnung des Boilers auf einer Seite, d.h. wobei die Schraubenlinie um eine horizontale Achse umläuft, eine wirksame Erwärmung des Zapfwassers erzielt wird, weil dieses im Gegenstrom Wärme mit dem durch den Innenkanal strömenden Wasser austauscht, das vom wärmsten Teil des Raumes 322 innerhalb des Boilers 320 kommt.

Es wird dem Fachmann klar sein, daß im Rahmen der Erfindung noch viele andere Ausführungsmöglichkeiten bestehen als die oben beschriebenen Beispiele. So kann beispielsweise der Kollektorkreis als ein im wesentlichen luftfreier geschlossener Kreis ausgebildet sein, ohne Einrichtungen, den Kollektor leerlaufen zu lassen, und in der Außenluft liegende Teile des Kollektorkreises.

## Patentansprüche

1. System zum Erwärmen von Zapfwasser mit Sonnenenergie, umfassend einen Kollektorkreis zum Führen eines Fluidums, einen Sonnenkollektor (10), ein Speichergefäß (20; 120; 220; 320) mit einem Speicherraum (22; 322), das mit dem Sonnenkollektor (10) in Reihe geschaltet in den genannten Kollektorkreis aufgenommen ist, um das Fluidum vom Sonnenkollektor (10) zum Speichergefäß (20; 120; 220; 320) zu führen, und eine Zapfwasserleitung (70, 71; 281, 282; 381, 382) mit einem Zapfwasserkanal (385), **dadurch gekennzeichnet**, daß das Speichergefäß (20; 120; 220; 320) in den genannten Kollektorkreis aufgenommen ist, um vom Sonnenkollektor (10) erwärmtes und vom Sonnenkollektor (10) zum Speichergefäß (20; 120; 220; 320) geführtes Fluidum im Speicherraum (22; 322) zu empfangen, und daß der Zapfwasserkanal (385) in der Zapfwasserleitung (70, 71; 281, 282; 381, 382) getrennt vom genannten Speicherraum (22; 322) verläuft, weiter umfassend eine Wärmetauschverbindung (50, 61, 62) zwischen dem Zapfwasserkanal (385) und dem Speicherraum (22; 322) zum Übertragen von Wärme aus im Speicherraum gespeichertem Fluidum auf Wasser im Zapfwasserkanal (385).

2. System nach Anspruch 1, wobei die Wärmetauschverbindung von einem außerhalb des Speichergefäßes (20; 120) gelegenen Wärmetauscher (50) und einem Wärmetauschkreis (61, 62) zwischen dem Wärmetauscher (50) und dem Speichergefäß (20; 120) gebildet ist.

3. System nach Anspruch 2, weiter umfassend eine Pumpe (60) im Wärmetauschkreis (61, 62) und einen Strömungsschalter (72) in der Zapfwasserleitung (71), wobei die Pumpe (60) mit dem Strömungsschalter (72) kommuniziert, um die Pumpe (60) als Reaktion auf das Schalten des Strömungsschalters (72) zu bedienen.

4. System nach Anspruch 1, wobei die Wärmetauschverbindung von einer im Speichergefäß (220; 320) gelegenen Wärmetauschstruktur (280; 380) gebildet ist, durch die hindurch der Zapfwasserkanal (385) der Zapfwasserleitung (281, 282; 381, 382) sich erstreckt.

5. System nach Anspruch 4, weiter umfassend Mittel zum Abführen im Ruhezustand von in der Wärmetauschstruktur (280; 380) enthaltenem Zapfwasser.

6. System nach Anspruch 4 oder 5, wobei die im Speichergefäß (320) gelegene Wärmetauschstruktur (380) einen Kollektorleitungsteil (384) aufweist, der sich in Längsrichtung des und mindestens teilweise innerhalb mindestens eines Teiles des Zapfwasserkanals (385) der Zapfwasserleitung (281, 282; 381, 382) erstreckt.

7. System nach einem der Ansprüche 1-3, wobei das Speichergefäß (220; 320) in horizontaler Richtung im wesentlichen eine längliche Form aufweist.

8. System nach einem der vorhergehenden Ansprüche,
wobei ein Stromabwärtsende (21; 121) des Kollektorkreises in einen oberen Bereich des Speicherraumes (22; 322) im Speichergefäß (20; 120; 220; 320) ausmündet, der im Gebrauch über dem Fluidumspiegel im Speichergefäß (20; 120; 220; 320) liegt,
wobei ein Stromaufwärtsende (23; 123) des Kollektorkreises an einen unter dem genannten oberen Bereich des Speicherraumes (22; 322) im Speichergefäß (20; 120; 220; 320) gelegenen Bereich anschließt und im Gebrauch unter dem Fluidumspiegel im Speichergefäß (20; 120; 220; 320) liegt,
wobei mindestens ein Teil des genannten Kollektorkreises auf einem Niveau, das gleich dem oder höher als das Niveau des genannten oberen Bereiches liegt, und
wobei der genannte Kollektorkreis eingerichtet ist, um wenigstens in Abwesenheit eines Antriebes des Fluidumumlaufes im Kollektorkreis zum Stromabwärtsende (21) eine Fluidumströmung im Kollektorkreis zum Stromaufwärtsende (23) zuzulassen, das alles derart, daß Wasser im Kollektorkreis, wenigstens in Abwesenheit des Antriebes des Fluidumumlaufes im Kollektorkreis zum Stromabwärtsende, wenigstens teilweise aus dem Kollektorkreis und zum Speicherraum (22; 322) des Speichergefäßes (20; 120; 220; 320) abgeführt wird.

9. System nach einem der vorhergehenden Ansprüche, wobei ein Stromabwärtsende des Kollektorkreises in den Speicherraum (22) im Speichergefäß (20; 120) auf einem Niveau über einem Abgabedurchlaß (24) ausmündet, über welchen der Speichsrraum (22) im Speichergefäß (20; 120) mit einem außerhalb des Speichergefäßes (20; 120) gelegenen Wärmetauscher (50) kommuniziert.
